# EUROPEAN PATENT SPECIFICATION

(11) **EP 2 938 481 B1**
(45) Date of publication and mention of the grant of the patent: **15.02.2017**
(21) Application number: 13826968.3
(22) Date of filing: 19.12.2013
(51) Int. Cl.: B29D 30/00

(54) **METHOD AND PLANT FOR MANAGING GREEN TYRES**
VERFAHREN UND ANLAGE ZUR VERWALTUNG VON REIFENROHLINGEN
PROCÉDÉ ET INSTALLATION DE GESTION DE PNEUMATIQUES CRUS

(30) Priority: 27.12.2012 IT MI20122233; 13.02.2013 US 201361764231 P
(43) Date of publication of application: 04.11.2015
(73) Proprietor: Pirelli Tyre S.p.A., 20126 Milano (IT)
(72) Inventor: MARCHINI, Maurizio, I-20126 Milano (IT); BALIA, Stefano, I-20126 Milano (IT); MERVIC, Stefano Rosario, I-20126 Milano (IT); FABBRETTI, Marco, I-20126 Milano (IT)
(74) Representative: Vittorangeli, Lucia
(86) International application number: PCT/IB2013/061129
(87) International publication number: WO 2014/102677

(56) References cited:
- EP-A2- 0 922 561
- WO-A1-2006/128969
- WO-A2-00/35665
- US-A- 5 631 028

## Description

The present invention relates to a method as defined in claim 1 and a plant as defined in claim 10 for managing green tyres.

Preferred embodiments of the invention
are defined in the dependent claims.

The production cycles of a tyre provide for manufacturing and/or assembling the various components of a tyre being processed in one or more building lines and subsequently for subjecting the tyre being processed to a moulding and curing process adapted to define the structure of the tyre according to a desired geometry and tread design.

A tyre generally comprises a carcass structure comprising at least one carcass ply made of elastomeric material reinforced with reinforcement cords lying in substantially radial planes (a radial plane contains the rotation axis of the tyre).

The tyre further comprises a crown structure comprising at least one belt layer situated in a radially external position relative to the carcass ply. The crown structure further comprises a tread band made of elastomeric material disposed radially external relative to the belt layer. Following the building of the green tyre actuated through the assembly of respective components, a moulding and curing processing is generally carried out aimed to determine the structural stabilization of the tyre through cross-linking of the elastomeric compositions as well as to impart, on the same tyre, a desired tread design and possible distinctive graphical marks at the sidewalls of the tyre.

By "elastomeric material" it is intended to indicate a composition comprising at least one elastomeric polymer and at least one reinforcement filler. Preferably, such composition further comprises additives such as, for example, a cross-linking and/or a plasticising agent. Due to the presence of the cross-linking agent, such material can be cross-linked by heating, so as to form the final manufactured item.

By "green tyre" a tyre is indicated, obtained from the building process and not yet moulded and vulcanised.

By "line for building green tyres" it is intended a line in which the structural components of the green tyre are built or assembled until a green tyre is formed comprising the shaped carcass structure assembled to the crown structure provided with tread band.

By "curing line" it is intended a line comprising a plurality of curing moulds in which the green tyres are subjected to a moulding and vulcanising processing. Said plurality of moulds can comprise moulds of different sizes for the processing of different tyre models.

By tyre "model" it is intended the set of geometric characteristics (such as the tread band width, sidewall height, fitting diameter), structural characteristics (such as single ply or two-ply, radial or with crossed carcass plies, with or without belt structure, type of belt structure - with crossed belts and at zero degrees, type of tread band at one or more layers etc.) and technological characteristics (such as a mixture of the various structural components, materials constituting the textile or metallic reinforcement cords, formation type of the reinforcement cords, etc.).

By "exchange area" it is intended a zone defined within the plant in which two parts or portions or elements of a plant are operatively associated with each other.

By "loading line" it is intended a conveyor, preferably fixed, arranged between two parts or portions or elements of a plant, in particular directly connected to each other.

Two parts or portions or elements of a plant are defined "directly connected" to each other, when a direct connection is present from one part to the other part actuated by means of one or more conveyors of any type.

Two parts or portions or elements of a plant are defined "operatively associated" with each other, when a connection is present from one to the other actuated by means of one or more conveyors of any type and/or by at least one exchange area.

By "processing station" it is intended a station in which the green tyres - directed to a specific curing mould - are carried at a pre-established frequency. The processing is necessary in order to prevent problems of separation between the vulcanisation chamber and the inner surface of the tyre.

The document WO 2010/070374, on behalf of the same Applicant, describes a plant and a process for building green tyres for vehicle wheels in which the production is possible of a plurality of batches, each comprising a defined number of tyres, said batches being differentiated based on the technical characteristics of the tyres that constitute them.

Document US 5631028 - A discloses a tire manufacturing plant (and a method) capable of manufacturing different kinds of tires, the plant essentially comprising a green tire building line, a plurality of vulcanizing presses, a first and a second green tire storage area and means for transferring the green tires through the plant. Tire conveyance is performed through the use of pallets, conveying devices and robots.

Document EP 922561 - A discloses a tire manufacturing plant capable of manufacturing different kinds of tires, comprising a tire building station, a vulcanizing station and a plurality of interchangeable moulds, in order to produce different kinds of tires.

Document WO 2006/128969 - A discloses a green tire conveyor for use during manufacture of vehicle tires, the conveyor comprising a horizontal carrier with a horizontally collapsible arm provided with a gripper, so that the tire is transferred and released horizontally into desired location on the side of the curing press below a loading manipulator.

The document WO 00/35665A2 describes an automatic transfer system, which by means of monorail conveyors carries green tyres to moulding chambers. Each monorail conveyor deposits a green tyre on an elevator system which in turn transfers the green tyre to a loader of the moulding chamber. The elevator system provides a buffer for the tyres being processed. The green tyres can be stored in a buffer ring of the monorail conveyor if the system is not ready for immediately transferring the tyres to the moulding chambers.

The Applicant has observed that, by providing for a single building line that supplies a single moulding line possibly using an intermediate buffer, the plant described in WO 00/35665A2 is very rigid with regard to the number, type and size of the tyres under production in the time unit.

In particular the Applicant has observed that the plant described in WO 00/35665A2 sets a tight constraint on the position of the moulding chambers within the moulding line and inside the plant itself.

The Applicant has verified that by replicating a plant of the type described in WO 00/35665A2, multiplying the number of building lines associated with relative moulding lines, the rigidity thereof is increased since one obtains a plant formed by n independent blocks, each composed of a building line associated with a relative curing line.

The Applicant has perceived that providing for additional connections - arranged at the storages for green tyres coming from building lines and/or at the curing lines - can lead to a greater flexibility in the management of the exchanges between the parts of the plant.

More precisely, the Applicant has finally found that arranging multiple storages for green tyres that can be connected together and/or multiple curing lines that can be connected together, at least one storage being directly connected to a corresponding building line, allows preventing constraints on the position of the curing moulds within the curing line and hence selecting - from among all the storages - the green tyre suitable for the available mould in any curing line of the plant. The plant is therefore versatile and quickly adaptable, also to the production of batches of limited quantities of different tyre models.

More precisely, in accordance with a first aspect, the invention relates to a method for managing green tyres in a tyre building plant comprising building at least one sequence of green tyres in at least one line for building green tyres.

Preferably it is provided to place the green tyres progressively exiting from said at least one building line into at least two storages.

Preferably it is provided to detect the availability of a curing mould in at least two curing lines.

Preferably it is provided to select - in said storages - a green tyre suitable for the available curing mould. Preferably, when said available curing mould is comprised in a curing line directly connected to a storage different from the storage comprising said selected green tyre, said selected green tyre is transferred to said available curing mould passing at least through the storage directly connected to the curing line comprising the available curing mould. Preferably, when said available curing mould is comprised in a curing line directly connected to a storage different from the storage comprising said selected green tyre, said selected green tyre is transferred to said available curing mould passing at least through the curing line directly connected to the storage comprising said selected green tyre.

The Applicant deems that the aforesaid solution allows a wide versatility and adaptability of the plant since the presence of intermediate passages between the storages or between the curing lines eliminates problems of management of the different curing moulds distributed between the curing lines in the case of production of batches of limited quantities of different tyre models. In accordance with a second aspect, the invention relates to a plant for managing green tyres comprising at least one line for building green tyres.

Preferably the plant comprises at least two storages. Preferably the plant comprises at least two curing lines.

Preferably each curing line is operatively associated with at least another curing line.

Preferably each storage is operatively associated with at least another storage.

Preferably each storage is directly connected to a respective curing line forming an assembly therewith. Preferably said at least one building line is directly connected to at least one of said assemblies.

Preferably said plant comprises a control unit programmed for detecting the availability of a curing mould of said curing lines.

Preferably said plant comprises a control unit programmed for selecting - in said storages - a green tyre suitable for the available curing mould.

Preferably said plant comprises a control unit programmed for transferring - to the available curing mould - said selected green tyre passing at least through the storage belonging to the same assembly of the curing line comprising the available curing mould, when said available curing mould is comprised in a curing line belonging to an assembly different from that relative to the storage comprising said selected green tyre.

Preferably said plant comprises a control unit programmed for transferring - to the available curing mould - said selected green tyre passing at least through the curing line belonging to the same assembly of the storage comprising said selected green tyre, when said available curing mould is comprised in a curing line belonging to an assembly different from that relative to the storage comprising said selected green tyre.

The present invention in at least one of the aforesaid aspects can have at least one of the following preferred characteristics.

Preferably it is provided to provide - in a given time range - a number of finished tyres exiting from the curing lines equivalent to the number of green tyres built in sequence and exiting from the at least one building line in a corresponding time range.

The Applicant deems that the aforesaid solution allows optimising the operation of the plant and the distribution of the green tyres between the curing moulds.

Preferably it is provided to arrange at least two assemblies each comprising a storage and a curing line directly connected to each other.

Preferably it is provided to arrange at least two assemblies each comprising a building line, a storage directly connected to the building line and a curing line directly connected to the storage.

Preferably it is provided to arrange the same number of storages and curing lines.

Preferably it is provided to arrange the same number of building lines, storages and curing lines.

The Applicant deems that the definition of basic assemblies, each comprising a building line, a storage and a curing line, is the optimal solution that can be easily replicated if it is necessary to increase the plant productivity.

Preferably it is provided to activate a loading line disposed between the storage comprising said selected green tyre and the curing line directly connected thereto for transferring the selected green tyre to the available curing mould.

Preferably it is provided to activate an exchange area between said at least two storages if the available curing mould is comprised in a curing line directly connected to a storage different from the storage comprising said selected green tyre.

The Applicant deems that the activation of an exchange area between the two storages simplifies the intermediate passage between the storages themselves. Preferably said exchange area between said at least two storages comprises at least one exchange station for each of said storages.

The Applicant deems that the definition of an exchange station simplifies the transfer and makes it effective. Preferably the selected green tyre is brought to the exchange station of the storage comprising said selected green tyre and from here it is transferred to the exchange station of the storage directly connected to the curing line comprising the available curing mould. Preferably it is provided to transfer empty supports of green tyres from the storage directly connected to the curing line comprising the available curing mould to a different storage using the relative exchange stations. The Applicant deems that the use of the exchange stations also for the management of the empty supports simplifies and rationalises the operation of the plant. Preferably it is provided to displace the green tyres on supports between the building line and said at least two storages.

Preferably it is provided to activate an exchange area between said two curing lines if the available curing mould is comprised in a curing line directly connected to a storage different from the storage comprising said selected green tyre.

The Applicant deems that the activation of an exchange area between the two curing lines simplifies the intermediate passage between the curing lines themselves.

Preferably said exchange area between said at least two curing lines comprises a station for processing green tyres.

Preferably transferring the selected green tyre between two curing lines through the station for processing green tyres, and such transferring comprises processing at a specific frequency the selected green tyres directed to a specific curing mould.

The Applicant deems that using the station for processing green tyres as exchange area between the curing lines rationalises the plant and simplifies the management thereof, in any case allowing the processing when necessary.

Preferably it is provided to select - in a storage - the oldest green tyre suitable for the available curing mould.

Preferably it is provided to select - from among all the storages provided in the plant - the oldest green tyre suitable for the available curing mould in any curing line of the plant.

Preferably at least two assemblies are provided, each comprising a building line, a storage directly connected to the building line and a curing line directly connected to the storage.

Preferably a loading line is provided, disposed between a storage and the curing line directly connected thereto, wherein said control unit is programmed for activating said loading line for transferring the selected green tyre to the available curing mould. Preferably an exchange area is provided between said at least two storages which can be activated if the available curing mould is comprised in a curing line directly connected to a storage different from the storage comprising said selected green tyre.

Preferably said control unit is programmed for activating said exchange area between said at least two storages.

Preferably said control unit is programmed for sending the selected green tyre to the exchange station of the storage in which it is located and from here transferring it to the exchange station of the storage directly connected to the curing line comprising the available curing mould.

Preferably supports are provided for the green tyres displaced between the building line and said at least two storages.

Preferably said control unit is programmed for transferring empty supports of green tyres from the storage directly connected to the curing line comprising the available curing mould to a different storage using the relative exchange stations.

Preferably an exchange area is provided between said at least two curing lines.

Preferably said control unit is programmed for activating said exchange area if the available curing mould is comprised in a curing line directly connected to a storage different from the storage comprising said selected green tyre.

Preferably said control unit is programmed for transferring the selected green tyre between two curing lines through the station for processing green tyres, processing at a specific frequency the selected green tyres directed to a specific curing mould.

Preferably said control unit is programmed for selecting - in a storage - the oldest green tyre suitable for the available curing mould.

Preferably said control unit is programmed for selecting - from among all the storages provided in the plant - the oldest green tyre suitable for the available curing mould in any curing line of the plant.

Further characteristics and advantages of the invention will be clearer from the following description of several embodiments of methods and plants for managing green tyres according to the invention given as a nonlimiting example with reference to the enclosed figures in which:
- figure 1 shows a schematic lay-out of a plant for managing green tyres in which the method according to one embodiment of the present invention is actuated;
- figure 2 shows a possible modified embodiment of the plant of figure 1.

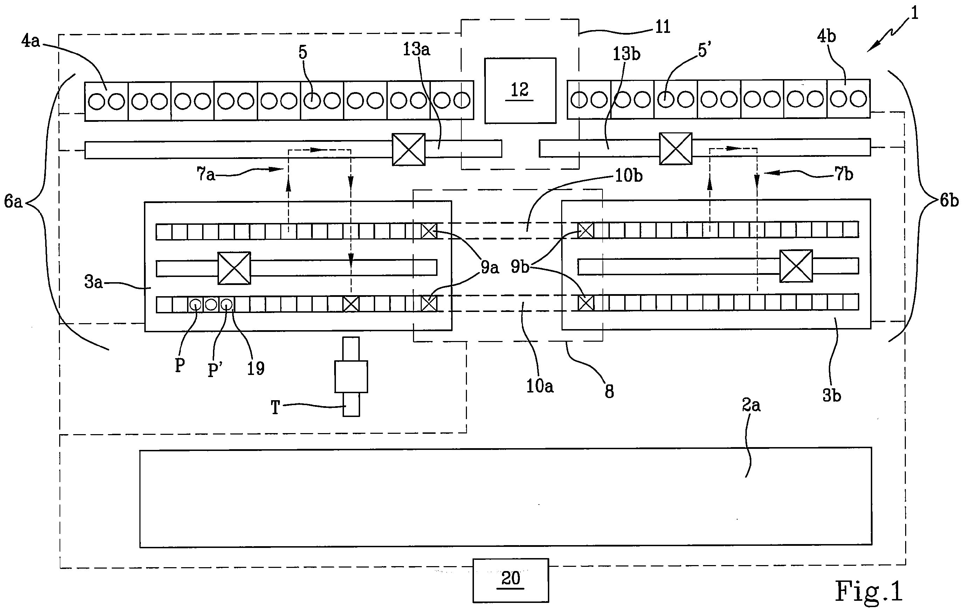

With reference to the enclosed figure 1, reference number 1 indicates a plant for managing green tyres.

2a indicates a line for building green tyres.

3a and 3b respectively indicate two storages while 4a and 4b respectively indicate two curing lines. Within each curing line, 5 indicates a curing mould of the plurality of curing moulds which form the curing line itself.

The example illustrated in figure 1 thus comprises a building line 2a, two storages 3a-3b and two curing lines 4a-4b. In accordance with different embodiments of the invention, the plant 1 can comprise two or more building lines, two or more storages and two or more curing lines.

Between each storage 3a-3b and each curing line 4a-4b, a direct connection is present, actuated by means of one or more conveyors. According to the example illustrated in figure 1, a loading line 7a is disposed between a storage 3a and the respective curing line 4a. Analogously, a loading line 7b is disposed between a storage 3b and the respective curing line 4b. In particular each storage 3a-3b is directly connected to a respective curing line 4a-4b forming a respective assembly 6a-6b therewith. Preferably a loading line 7a-7b is provided for each assembly 6a-6b.

In the case in which only one building line 2a is provided, such building line 2a is directly connected to at least one from among the assemblies 6a-6b. In the case of figure 1, the building line 2a is directly connected to the storage indicated with 3a and then to the assembly indicated with 6a. Between the building line 2a and the storage 3a, a direct connection is present, actuated by means of one or more conveyors. Each storage is operatively associated with at least another storage. With reference to the example illustrated in figure 1, the two storages 3a-3b are operatively associated with each other and such association is for example obtained by means of an exchange area 8 between the two storages themselves.

The exchange area 8 comprises at least one exchange station for each of the storages. In the example illustrated in the figure, two exchange stations 9a-9b are indicated for each of the storages.

One or more conveyors 10a-10b of the exchange area 8 define the connection present between the two storages 3a-3b. According to the example illustrated in figure 1, each conveyor 10a-10b connects an exchange station 9a of the storage 3a with an exchange station 9b of the storage 3b.

Each curing line is operatively associated with at least another curing line. With reference to the example illustrated in figure 1, the two curing lines 4a-4b are operatively associated with each other and such association is for example obtained by means of an exchange area 11 between the two curing lines themselves.

The exchange area 11 between the two curing lines 4a-4b can comprise a station for processing green tyres 12. For each curing line 4a-4b, a transfer device 13a-13b is provided, adapted to pick up the selected green tyre coming from the storage 3a-3b directly connected to the respective curing line 4a-4b and transfer it to the curing line itself or to the station for processing green tyres 12. Preferably each transfer device 13a-13b picks up the selected green tyre coming from the respective loading line 7a-7b.

In accordance with a possible embodiment, the plant 1 comprises supports 19 for the green tyres displaced between the building line 2a and the storages 3a-3b. Preferably the green tyres are displaced on supports 19 until they are picked up by the transfer device 13a-13b provided for each curing line 4a-4b. The empty supports return to the storage along the respective loading line 7a-7b.

With reference to figure 1, the plant 1 further comprises a control unit 20 programmed for:
detecting the availability of a curing mould 5' of the curing lines 4a-4b,
selecting - within the storages 3a-3b - from among a plurality of green tyres P provided by the building line 2a, the oldest from among the green tyres P' suitable for the available curing mould 5',
transferring the selected green tyre P' to the available curing mould 5'.

Figure 1 illustrates a situation in which the available curing mould 5' is comprised in a curing line 4b belonging to an assembly 6b different from that 6a relative to the storage 3a comprising the selected green tyre P'. In other words, the figure 1 illustrates a situation in which the available curing mould 5' is comprised in a curing line 4b directly connected to a storage 3b different from the storage 3a comprising the selected green tyre P'.

In this case, the control unit 20 is programmed for transferring the selected green tyre P' to the available curing mould 5' passing
i) at least through the storage 3b belonging to the same assembly 6b of the curing line 4b comprising the available curing mould 5', or
ii) at least through the curing line 4a belonging to the same assembly 6a of the storage 3a comprising the selected green tyre P'.

In case i), for transferring the selected green tyre P' to the available curing mould 5', the control unit 20 is programmed for activating the exchange area 8 between the storages 3a-3b. According to the example of figure 1, the control unit 20 is programmed for sending the selected green tyre P' to the exchange station 9a of the storage 3a in which it is located and from here transferring it to the exchange station 9b of the storage 3b directly connected to the curing line 4b comprising the available curing mould 5'. The latter transfer is obtained by activating the loading line 7b provided between the storage 3b and the respective curing line 4b containing the available curing mould 5'. In the case in which the green tyres are displaced on supports 19 between the building line 2a and the storages 3a-3b, the control unit 20 is programmed for transferring the empty supports 19 of green tyres from the storage 3b directly connected to the curing line 4b comprising the available curing mould 5' to a different storage 3a using the relative exchange stations 8.

In case ii), for transferring the selected green tyre P' to the available curing mould 5', the control unit 20 is programmed for activating the loading line 7a provided between the storage 3a comprising the selected green tyre P' and the respective curing line 4a directly connected thereto. According to the example of figure 1, the control unit 20 is programmed for activating the exchange area 11 between the two curing lines 4a-4b for transferring the selected green tyre P' from the curing line 4a directly connected to the storage 3a in which said selected green tyre P' was disposed to the curing line 4b containing the available curing mould 5'. Preferably the control unit 20 is programmed for transferring the selected green tyre between the two curing lines 4a-4b through the station for processing green tyres 12, processing at a specific frequency the selected green tyres P' directed to a specific curing mould 5'.

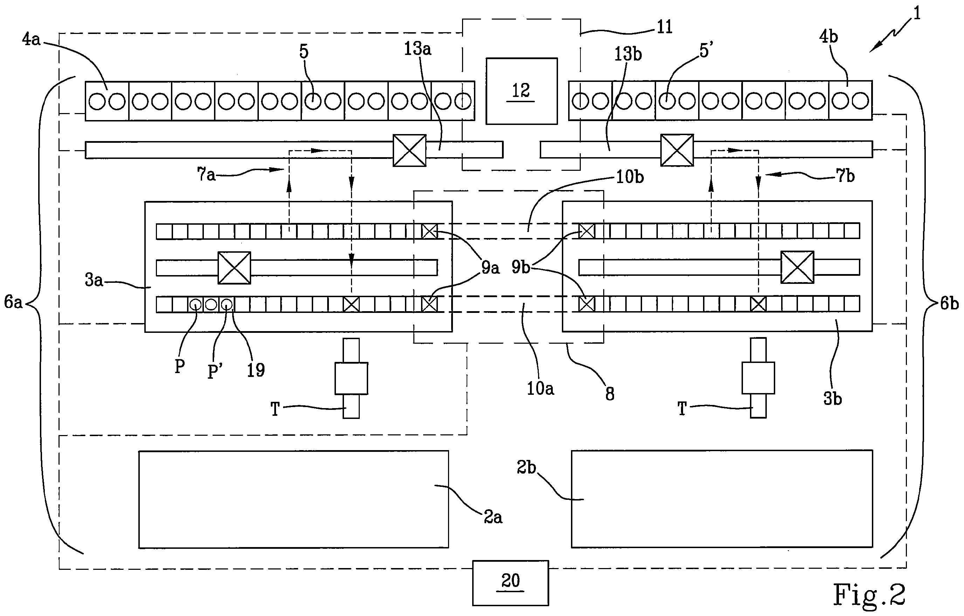

The plant illustrated in figure 2 differs from that illustrated in figure 1 due to the fact that two building lines 2a-2b are provided. This is a plant comprising two assemblies 6a-6b, each comprising a building line 2a-2b, a storage 3a-3b directly connected to the building line 2a-2b and a curing line 4a-4b directly connected to the storage 3a-3b. Between each building line and the respective storage, a direct connection is present, actuated by means of one or more conveyors T.

In accordance with a possible embodiment, two or more assemblies can be provided, each comprising at least one storage and at least one curing line.

In accordance with a possible embodiment, two or more assemblies can be provided, each comprising at least one building line, at least one storage and at least one curing line.

In accordance with a possible embodiment, the plant 1 comprises the same number of storages and curing lines. In accordance with a possible embodiment, the plant 1 comprises the same number of building lines, storages and curing lines.

In any of the described embodiments, the control unit 20 is programmed for selecting - in a storage - the oldest green tyre suitable for the available curing mould.

In any of the described embodiments, the control unit 20 is programmed for selecting - from among all the storages provided in the plant 1 - the oldest green tyre suitable for the available curing mould in any curing line of the plant itself.

Any of the above-described plants can be adapted to carry out a method for managing green tyres according to the present invention. Such method is described below with reference, by way of example, to the plant of figure 2.

One proceeds to build at least one sequence of green tyres P in the building line 2a of green tyres and to place the green tyres P progressively exiting from the building line 2a in the storage 3a directly connected thereto.

One further proceeds to build at least one sequence of green tyres P in the building line 2b of green tyres and to place the green tyres P progressively exiting from the building line 2b in the storage 3b directly connected thereto.

During production, one proceeds to detect the availability of a curing mould 5 between the two curing lines 4a-4b and to select - in the storages 3a-3b - a green tyre suitable for the available curing mould 5'. Figure 2 illustrates a situation in which the available curing mould 5' is comprised in a curing line 4b belonging to an assembly 6b different from that 6a relative to the storage 3a comprising the selected green tyre P'. In other words, figure 2 illustrates a situation in which the available curing mould 5' is comprised in a curing line 4b directly connected to a storage 3b different from the storage 3a comprising the selected green tyre P'.

In this situation the selected green tyre P' is transferred to the available curing mould 5' passing
i) at least through the storage 3b directly connected to the curing line 4b comprising the available curing mould 5', or
ii) at least through the curing line 4a directly connected to the storage 3a comprising the selected green tyre P'.

In case i), it is provided to activate the exchange area 8 between the storages 3a-3b. In particular the selected green tyre P' is brought to the exchange station 9a of the storage 3a comprising such selected green tyre P' and from here it is transferred to the exchange station 9b of the storage 3b directly connected to the curing line 4b comprising the available curing mould 5'.

In the case in which the green tyres are displaced on supports 19 between the building lines 2a-2b and the storages 3a-3b, it is then provided to transfer the empty supports 19 from the storage 3b directly connected to the curing line 4b comprising the available curing mould 5' to a different storage (the storage 3a of figure 2). Such transfer is achieved using the relative exchange stations 9a-9b of the storages.

In case ii), it is provided to activate the loading line 7a disposed between the storage 3a comprising the selected green tyre P' and the curing line 4a directly connected thereto for transferring the selected green tyre to the available curing mould 5'. Subsequently, one proceeds to activate the exchange area 11 between the two curing lines 4a-4b. Possibly, the selected green tyres directed to a specific curing mould and passing through the exchange area 11 are processed within the exchange area itself at a specific frequency.

According to a possible embodiment, it is provided to provide - in a given time range - a number of finished tyres exiting from the curing lines 4a-4b equivalent to the number of green tyres built in sequence and exiting from the building line(s) 2a-2b in a corresponding time range.

The method according to the present invention provides to arrange at least two assemblies each comprising a storage and a curing line directly connected to each other. Preferably the method according to the present invention provides for arranging at least two assemblies each comprising a building line, a storage directly connected to the building line and a curing line directly connected to the storage. Still more preferably, the method according to the present invention provides for arranging the same number of storages and curing lines and possibly building lines. According to a possible embodiment, it is provided to select - in a storage - the oldest green tyre suitable for the available curing mould. In particular it is provided to select - from among all the storages provided in the plant - the oldest green tyre suitable for the available curing mould in any curing line of the plant.

## Claims

1. A method for managing green tyres in a tyre building plant (1) comprising:
building at least one sequence of green tyres (P) in at least one line (2a-2b) for building green tyres;
placing the green tyres (P) progressively exiting from said at least one building line (2a-2b) into at least two storages (3a-3b);
detecting the availability of a curing mould (5) in at least two curing lines (4a-4b);
selecting - in said storages (3a-3b) - a green tyre (P) suitable for the available curing mould (5');
wherein, when said available curing mould (5') is comprised in a curing line (4a-4b) directly connected to a storage (3a-3b) different from the storage (3a-3b) comprising said selected green tyre (P'), said selected green tyre (P') is transferred to said available curing mould (5') passing
i) at least through the storage (3a-3b) directly connected to the curing line (4a-4b) comprising the available curing mould (5'), or
ii) at least through the curing line (4a-4b) directly connected to the storage (3a-3b) comprising said selected green tyre (P').

2. A method for managing green tyres as claimed in claim 1, comprising providing - in a given time range - a number of finished tyres exiting from the curing lines (4a-4b) equivalent to the number of green tyres (P) built in sequence and exiting from the at least one building line (2a-2b) in a corresponding time range.

3. A method for managing green tyres as claimed in claim 1, comprising:
arranging at least two assemblies (6a-6b) each comprising a building line (2a-2b), a storage (3a-3b) directly connected to the building line (2a-2b) and a curing line (4a-4b) directly connected to the storage (3a-3b).

4. A method for managing green tyres as claimed in claim 1, comprising:
activating a loading line (7a-7b) disposed between the storage (3a-3b) comprising said selected green tyre (P') and the curing line (4a-4b) directly connected thereto for transferring the selected green tyre (P') to the available curing mould (5').

5. A method for managing green tyres as claimed in claim 1, comprising:
activating an exchange area (8) between said at least two storages (3a-3b) if the available curing mould (5') is comprised in a curing line (4a-4b) directly connected to a storage (3a-3b) different from the storage (3a-3b) comprising said selected green tyre (P').

6. A method for managing green tyres as claimed in claim 1, comprising:
activating an exchange area (11) between said two curing lines (4a-4b) if the available curing mould (5') is comprised in a curing line (4a-4b) directly connected to a storage (3a-3b) different from the storage (3a-3b) comprising said selected green tyre (P').

7. A method for managing green tyres as claimed in claim 6, wherein said exchange area (11) between said at least two curing lines (4a-4b) comprises a station (12) for processing green tyres (P) and wherein transferring the selected green tyre (P') between two curing lines (4a-4b) through the station (12) for processing green tyres comprises processing at a specific frequency the selected green tyres (P') directed to a specific curing mould (5).

8. A method for managing green tyres as claimed in claim 1, comprising selecting - in a storage (3a-3b) - the oldest green tyre suitable for the available curing mould (5').

9. A method for managing green tyres as claimed in claim 1, comprising selecting - from among all the storages (3a-3b) provided in the plant - the oldest green tyre suitable for the available curing mould (5') in any curing line (4a-4b) of the plant.

10. A plant for managing green tyres comprising at least one line (2a-2b) for building green tyres, at least two storages (3a-3b) and at least two curing lines (4a-4b), each curing line (4a-4b) being operatively associated with at least another curing line (4a-4b), each storage (3a-3b) being operatively associated with at least another storage (3a-3b), each storage (3a-3b) being directly connected to a respective curing line (4a-4b) forming an assembly (6a-6b) therewith, said at least one building line (2a-2b) being directly connected to at least one of said assemblies (6a-6b),
said plant further comprising a control unit (20) programmed for:
detecting the availability of a curing mould (5) of said curing lines (4a-4b),
selecting - in said storages (3a-3b) - a green tyre (P) suitable for the available curing mould (5'), transferring - to the available curing mould (5') - said selected green tyre (P') so that it passes
i) at least through the storage (3a-3b) belonging to the same assembly (6a-6b) of the curing line (4a-4b) comprising the available curing mould (5'), or
ii) at least through the curing line (4a-4b) belonging to the same assembly (6a-6b) of the storage (3a-3b) comprising said selected green tyre (P'),
when said available curing mould (5') is comprised in a curing line (4a-4b) belonging to an assembly (6a-6b) different from that relative to the storage (3a-3b) comprising said selected green tyre (P').

11. A plant for managing green tyres as claimed in claim 10, comprising at least two assemblies (6a-6b) each comprising a building line (2a-2b), a storage (3a-3b) directly connected to the building line (2a-2b) and a curing line (4a-4b) directly connected to the storage (3a-3b).

12. A plant for managing green tyres as claimed in claim 10, comprising the same number of building lines (2a-2b), storages (3a-3b) and curing lines (4a-4b).

13. A plant for managing green tyres as claimed in claim 10, comprising a loading line (7a-7b) disposed between a storage (3a-3b) and the curing line (4a-4b) directly connected thereto, wherein said control unit (20) is programmed for activating said loading line (7a-7b) for transferring the selected green tyre (P') to the available curing mould (5').

14. A plant for managing green tyres as claimed in claim 10, comprising an exchange area (8) between said at least two storages (3a-3b) which can be activated if the available curing mould (5') is comprised in a curing line (4a-4b) directly connected to a storage (3a-3b) different from the storage (3a-3b) comprising said selected green tyre (P').

15. A plant for managing green tyres as claimed in claim 10, comprising an exchange area (11) between said at least two curing lines (4a-4b) and wherein said exchange area (11) between said at least two curing lines (4a-4b) comprises a station (12) for processing green tyres (P).

## Patentansprüche

1. Verfahren zur Verwaltung von Rohreifen in einer Reifenfertigungsanlage (1), umfassend die folgenden Schritte:
Fertigen zumindest einer Sequenz von Rohreifen (P) in zumindest einer Linie (2a-2b) zur Fertigung von Rohreifen;
Platzieren der Rohreifen (P), die progressiv die zumindest eine Fertigungslinie (2a-2b) verlassen, in zumindest zwei Speichern (3a-3b);
Erfassen der Verfügbarkeit einer Vulkanisierform (5) in zumindest zwei Vulkanisierlinien (4a-4b);
Auswählen eines Rohreifens (P) in den Speichern (3a-3b), der für die verfügbare Vulkanisierform (5') geeignet ist;
wobei, wenn die verfügbare Vulkanisierform (5') in einer Vulkanisierlinie (4a-4b) enthalten ist, die direkt mit einem anderen Speicher (3a-3b) verbunden ist als der Speicher (3a-3b), der den ausgewählten Rohreifen (P') umfasst, der ausgewählte Rohreifen (P') an die verfügbare Vulkanisierform (5') überführt wird, wobei er
i) den Speicher (3a-3b) passiert, der direkt mit der Vulkanisierlinie (4a-4b) verbunden ist, die die verfügbare Vulkanisierform (5') umfasst, oder
ii) zumindest die Vulkanisierlinie (4a-4b) passiert, die direkt mit dem Speicher (3a-3b) verbunden ist, der den ausgewählten Rohreifen (P') umfasst.

2. Verfahren zur Verwaltung von Rohreifen nach Anspruch 1, das die folgenden Schritte umfasst: Bereitstellen, in einem gegebenen Zeitraum - einer Anzahl von fertigen Reifen, die die Vulkanisierlinien (4a-4b) verlassen, die äquivalent zu der Anzahl von Rohreifen (P) ist, die der Reihe nach gefertigt werden und die zumindest eine Fertigungslinie (2a-2b) in einem entsprechenden Zeitraum verlassen.

3. Verfahren zur Verwaltung von Rohreifen nach Anspruch 1, das die folgenden Schritte umfasst:
Anordnen von zumindest zwei Anordnungen (6a-6b), die jeweils eine Fertigungslinie (2a-2b), einen Speicher (3a-3b), der direkt mit der Fertigungslinie (2a-2b) verbunden ist, und eine Vulkanisierlinie (4a-4b), die direkt mit dem Speicher (3a-3b) verbunden ist, umfassen.

4. Verfahren zur Verwaltung von Rohreifen nach Anspruch 1, das die folgenden Schritte umfasst:
Aktivieren einer Beladungslinie (7a-7b), die zwischen dem Speicher (3a-3b), der den ausgewählten Rohreifen (P') umfasst, und der Vulkanisierlinie (4a-4b), die direkt damit verbunden ist, angeordnet ist, um den ausgewählten Rohreifen (P') an die verfügbare Vulkanisierform (5') zu überführen.

5. Verfahren zur Verwaltung von Rohreifen nach Anspruch 1, das die folgenden Schritte umfasst:
Aktivieren einer Austauschzone (8) zwischen den zumindest zwei Speichern (3a-3b), wenn die verfügbare Vulkanisierform (5') in einer Vulkanisierlinie (4a-4b) enthalten ist, die direkt mit einem anderen Speicher (3a-3b) verbunden ist als dem Speicher (3a-3b), der den ausgewählten Rohreifen (P') umfasst.

6. Verfahren zur Verwaltung von Rohreifen nach Anspruch 1, das die folgenden Schritte umfasst:
Aktivieren einer Austauschzone (11) zwischen den zwei Vulkanisierlinien (4a-4b), wenn die verfügbare Vulkanisierform (5') in einer Vulkanisierlinie (4a-4b) enthalten ist, die direkt mit einem anderen Speicher (3a-3b) verbunden ist als dem Speicher (3a-3b), der den ausgewählten Rohreifen (P') umfasst.

7. Verfahren zur Verwaltung von Rohreifen nach Anspruch 6, wobei die Austauschzone (11) zwischen den zumindest zwei Vulkanisierlinien (4a-4b) eine Station (12) zur Bearbeitung von Rohreifen (P) umfasst, und wobei das Überführen des ausgewählten Rohreifens (P') zwischen zwei Vulkanisierlinien (4a-4b) durch die Station (12) zur Bearbeitung von Rohreifen das Verarbeiten des ausgewählten Rohreifens (P'), der zu einer spezifischen Vulkanisierform (5) hin geleitet wird, mit einer spezifischen Frequenz umfasst.

8. Verfahren zur Verwaltung von Rohreifen nach Anspruch 1, umfassend das Auswählen des ältesten Rohreifens, der für die verfügbare Vulkanisierform (5') geeignet ist, aus einem Speicher (3a-3b).

9. Verfahren zur Verwaltung von Rohreifen nach Anspruch 1, umfassend das Auswählen des ältesten Rohreifens, der für die verfügbare Vulkanisierform (5') in allen Vulkanisierlinien (4a-4b) der Anlage geeignet ist, aus allen Speichern (3a-3b), die in der Anlage vorgesehen sind.

10. Anlage zur Verwaltung von Rohreifen umfassend zumindest eine Linie (2a-2b) zur Fertigung von Rohreifen, zumindest zwei Speicher (3a-3b) und zumindest zwei Vulkanisierlinien (4a-4b), wobei jede Vulkanisierlinie (4a-4b) operativ zumindest einer weiteren Vulkanisierlinie (4a-4b) zugeordnet ist, wobei jeder Speicher (3a-3b) operativ zumindest einem weiteren Speicher (3a-3b) zugeordnet ist, wobei jeder Speicher (3a-3b) direkt mit einer jeweiligen Vulkanisierlinie (4a-4b) verbunden ist und damit eine Anordnung (6a-6b) bildet, wobei die zumindest eine Fertigungslinie (2a-2b) direkt mit zumindest einer der Anordnungen (6a-6b) verbunden ist, wobei die Anlage des Weiteren eine Steuereinheit (20) umfasst, die programmiert ist, um:
die Verfügbarkeit einer Vulkanisierform (5) der zumindest zwei Vulkanisierlinien (4a-4b) zu erfassen,
aus den Speichern (3a-3b) einen Rohreifen, der für die verfügbare Vulkanisierform (5') geeignet ist, auszuwählen
den ausgewählten Rohreifen (P') so an die verfügbare Vulkanisierform (5') zu überführen, dass er
i) zumindest den Speicher (3a-3b) passiert, der zu derselben Anordnung (6a-6b) der Vulkanisierlinie (4a-4b) gehört, die die verfügbare Vulkanisierform (5') umfasst, oder
ii) zumindest die Vulkanisierlinie (4a-4b) passiert, die zu derselben Anordnung (6a-6b) gehört wie der Speicher (3a-3b), der den ausgewählten Rohreifen (P') umfasst,
wenn die verfügbare Vulkanisierform (5') in einer Vulkanisierlinie (4a-4b) enthalten ist, die zu einer Anordnung (6a-6b) gehört, die sich von jener mit dem Speicher (3a-3b) unterscheidet, die den Rohreifen (P') umfasst.

11. Anlage zur Verwaltung von Rohreifen nach Anspruch 10, umfassend zumindest zwei Anordnungen (6a-6b), die jeweils eine Fertigungslinie (2a-2b), einen Speicher (3a-3b), der direkt mit der Fertigungslinie (2a-2b) verbunden ist, und eine Vulkanisierlinie (4a-4b), die direkt mit dem Speicher (3a-3b) verbunden ist, umfassen.

12. Anlage zur Verwaltung von Rohreifen nach Anspruch 10, umfassend dieselbe Anzahl von Fertigungslinien (2a-2b), Speichern (3a-3b) und Vulkanisierlinien (4a-4b).

13. Anlage zur Verwaltung von Rohreifen nach Anspruch 10, umfassend eine Beladungslinie (7a-7b), die zwischen dem Speicher (3a-3b) und der Vulkanisierlinie (4a-4b), die direkt damit verbunden ist, angeordnet ist, wobei die Steuereinheit dazu programmiert ist, die Beladelinie (7a-7b) zu aktivieren, um den ausgewählten Rohreifen (P') an die verfügbare Vulkanisierform (5') zu überführen.

14. Anlage zur Verwaltung von Rohreifen nach Anspruch 10, umfassend eine Austauschzone (8) zwischen den zumindest zwei Speichern (3a-3b), die aktiviert werden kann, wenn die verfügbare Vulkanisierform (5') in einer Vulkanisierlinie (4a-4b) enthalten ist, die direkt mit einem anderen Speicher (3a-3b) verbunden ist als dem Speicher (3a-3b), der den ausgewählten Rohreifen (P') umfasst.

15. Anlage zur Verwaltung von Rohreifen nach Anspruch 10, umfassend eine
Austauschzone (11) zwischen den zumindest zwei Vulkanisierlinien (4a-4b), und wobei die Austauschzone (11) zwischen den zumindest zwei Vulkanisierlinien (4a-4b) eine Station (12) zur Bearbeitung von Rohreifen (P) umfasst.

## Revendications

1. Procédé de gestion de pneus crus dans une installation de construction de pneus (1) comprenant le fait :
de construire au moins une séquence de pneus crus (P) dans au moins une ligne (2a-2b) pour la construction de pneus crus ;
de placer les pneus crus (P) sortant progressivement de ladite au moins une ligne de construction (2a-2b) dans au moins deux magasins (3a-3b) ;
de détecter la disponibilité d'un moule de vulcanisation (5) dans au moins deux lignes de vulcanisation (4a-4b) ;
de sélectionner - dans lesdits magasins (3a-3b) - un pneu cru (P) adapté au moule de vulcanisation disponible (5');
où, lorsque ledit moule de vulcanisation disponible (5') est compris dans une ligne de vulcanisation (4a-4b) directement reliée à un magasin (3a-3b) différent du magasin (3a-3b) comprenant ledit pneu cru sélectionné (P'), ledit pneu cru sélectionné (P') est transféré audit moule de vulcanisation disponible (5') en passant
i) au moins par le magasin (3a-3b) directement relié à la ligne de vulcanisation (4a-4b) comprenant le moule de vulcanisation disponible (5'), ou
ii) au moins par la ligne de vulcanisation (4a-4b) directement reliée au magasin (3a-3b) comprenant ledit pneu cru sélectionné (P').

2. Procédé de gestion de pneus crus tel que revendiqué dans la revendication 1, comprenant le fait de fournir - dans une plage temporelle donnée - un nombre de pneus finis sortant des lignes de vulcanisation (4a-4b) équivalent au nombre de pneus crus (P) construits en séquence et sortant de l'au moins une ligne de construction (2a-2b) dans une plage temporelle correspondante.

3. Procédé de gestion de pneus crus tel que revendiqué dans la revendication 1, comprenant le fait :
d'agencer au moins deux ensembles (6a-6b) comprenant chacun une ligne de construction (2a-2b), un magasin (3a-3b), directement relié à la ligne de construction (2a-2b) et une ligne de vulcanisation (4a-4b) directement reliée au magasin (3a-3b).

4. Procédé de gestion de pneus crus tel que revendiqué dans la revendication 1, comprenant le fait :
d'activer une ligne de chargement (7a-7b) disposée entre le magasin (3a-3b) comprenant ledit pneu cru sélectionné (P') et la ligne de vulcanisation (4a-4b) directement reliée à celui-ci pour transférer le pneu cru sélectionné (P') au moule de vulcanisation disponible (5').

5. Procédé de gestion de pneus crus tel que revendiqué dans la revendication 1, comprenant le fait :
d'activer une zone d'échange (8) entre lesdits au moins deux magasins (3a-3b) si le moule de vulcanisation disponible (5') est compris dans une ligne de vulcanisation (4a-4b) directement reliée à un magasin (3a-3b) différent du magasin (3a-3b) comprenant ledit pneu cru sélectionné (P').

6. Procédé de gestion de pneus crus tel que revendiqué dans la revendication 1, comprenant le fait :
d'activer une zone d'échange (11) entre lesdites deux lignes de vulcanisation (4a-4b) si le moule de vulcanisation disponible (5') est compris dans une ligne de vulcanisation (4a-4b) directement reliée à un magasin (3a-3b) différent du magasin (3a-3b) comprenant ledit pneu cru sélectionné (P').

7. Procédé de gestion de pneus crus tel que revendiqué dans la revendication 6, dans lequel ladite zone d'échange (11) entre lesdites au moins deux lignes de vulcanisation (4a-4b) comprend une station (12) pour le traitement des pneus crus (P) et dans lequel le transfert du pneu cru sélectionné (P') entre deux lignes de vulcanisation (4a-4b) à travers la station (12) pour le traitement de pneus crus comprend le traitement à une fréquence spécifique des pneus crus sélectionnés (P') dirigés vers un moule de vulcanisation spécifique (5).

8. Procédé de gestion de pneus crus tel que revendiqué dans la revendication 1, comprenant le fait de sélectionner - dans un magasin (3a-3b) - le plus ancien pneu cru adapté au moule de vulcanisation disponible (5').

9. Procédé de gestion de pneus crus tel que revendiqué dans la revendication 1, comprenant le fait de sélectionner - parmi tous les magasins (3a-3b) prévus dans l'installation - le plus ancien pneu cru adapté au moule de vulcanisation disponible (5') dans une ligne de vulcanisation quelconque (4a-4b) de l'installation.

10. Installation de gestion de pneus crus comprenant au moins une ligne (2a-2b) pour la construction de pneus crus, au moins deux magasins (3a-3b) et au moins deux lignes de vulcanisation (4a-4b), chaque ligne de vulcanisation (4a-4b) étant associée de manière fonctionnelle à au moins une autre ligne de vulcanisation (4a-4b), chaque magasin (3a-3b) étant associé de manière fonctionnelle à au moins un autre magasin (3a-3b), chaque magasin (3a-3b) étant directement relié à une ligne de vulcanisation respective (4a-4b) formant un ensemble (6a-6b) avec celui-ci, ladite au moins une ligne de construction (2a-2b) étant directement reliée à au moins l'un desdits ensembles (6a-6b),
ladite installation comprenant en outre une unité de commande (20) programmée pour :
détecter la disponibilité d'un moule de vulcanisation (5) desdites lignes de vulcanisation (4a-4b),
sélectionner - dans lesdits magasins (3a-3b)- un pneu cru (P) adapté au moule de vulcanisation disponible (5'),
transférer - au moule de vulcanisation disponible (5') - ledit pneu cru sélectionné (P') de sorte qu'il passe
i) au moins par le magasin (3a-3b) appartenant au même ensemble (6a-6b) de la ligne de vulcanisation (4a-4b) comprenant le moule de vulcanisation disponible (5'), ou
ii) au moins par la ligne de vulcanisation (4a-4b) appartenant au même ensemble (6a-6b) du magasin (3a-3b) comprenant ledit pneu cru sélectionné (P'),
lorsque ledit moule de vulcanisation disponible (5') est compris dans une ligne de vulcanisation (4a-4b) appartenant à un ensemble (6a-6b) différent de celui relatif au magasin (3a-3b) comprenant ledit pneu cru sélectionné (P').

11. Installation de gestion de pneus crus telle que revendiquée dans la revendication 10, comprenant au moins deux ensembles (6a-6b), chacun comprenant une ligne de construction (2a-2b), un magasin (3a-3b) directement relié à la ligne de construction (2a-2b) et une ligne de vulcanisation (4a-4b) directement reliée au magasin (3a-3b) .

12. Installation de gestion de pneus crus telle que revendiquée dans la revendication 10, comprenant le même nombre de lignes de construction (2a-2b), de magasins (3a-3b) et de lignes de vulcanisation (4a-4b).

13. Installation de gestion de pneus crus telle que revendiquée dans la revendication 10, comprenant une ligne de chargement (7a-7b) disposée entre un magasin (3a-3b) et la ligne de vulcanisation (4a-4b) directement reliée à celui-ci, où ladite unité de commande (20) est programmée pour actionner ladite ligne de chargement (7a-7b) pour transférer le pneu cru sélectionné (P') au moule de vulcanisation disponible (5').

14. Installation de gestion de pneus crus telle que revendiquée dans la revendication 10, comprenant une zone d'échange (8) entre lesdits au moins deux magasins (3a-3b) qui peut être activée si le moule de vulcanisation disponible (5') est compris dans une ligne de vulcanisation (4a-4b) directement reliée à un magasin (3a-3b) différent du magasin (3a-3b) comprenant ledit pneu cru sélectionné (P').

15. Installation de gestion de pneus crus telle que revendiquée dans la revendication 10, comprenant une zone d'échange (11) entre lesdites au moins deux lignes de vulcanisation (4a-4b) et où ladite zone d'échange (11) entre lesdites au moins deux lignes de vulcanisation (4a-4b) comprend une station (12) pour le traitement de pneus crus (P).
